# FASCICULE DE BREVET EUROPEEN

(11) **EP 4 182 907 B1**
(45) Date de publication et mention de la délivrance du brevet: **22.05.2024**
(21) Numéro de dépôt: 21740154.6
(22) Date de dépôt: 22.06.2021
(51) Int. Cl.: G08G 5/00, H04W 28/06, H04W 76/14

(54) **ASPECTS TEMPORELS D'UNE GESTION CENTRALISÉE DE L'EXÉCUTION DE SERVICES CONNECTÉS D'UN VÉHICULE**
TEMPORÄRE ASPEKTE DER ZENTRALISIERTEN VERWALTUNG DER AUSFÜHRUNG VON VERBUNDENEN DIENSTEN EINES FAHRZEUGS
TEMPORAL ASPECTS OF CENTRALIZED MANAGEMENT OF THE EXECUTION OF CONNECTED SERVICES OF A VEHICLE

(30) Priorité: 15.07.2020 FR 2007398
(43) Date de publication de la demande: 24.05.2023
(73) Titulaire: Stellantis Auto SAS, 78300 Poissy (FR)
(72) Inventeur: LIN, Trista, 28210 VILLEMEUX SUR EURE (FR); LI, Xiaoting, 78310 MAUREPAS (FR)
(86) Numéro de dépôt international: PCT/FR2021/051131
(87) Numéro de publication internationale: WO 2022/013488

(56) Documents cités:
- EP-A1- 3 226 647
- WO-A1-2017/135881

## Description

La présente invention appartient au domaine de l'électronique embarquée dans un véhicule terrestre à moteur. En particulier, il concerne la gestion de l'exécution de services connectés d'un véhicule.

On entend par « véhicule terrestre à moteur » tout type de véhicule tel qu'un véhicule automobile, un cyclomoteur, une motocyclette, un robot de stockage dans un entrepôt, etc. On entend par « service mis en oeuvre par un véhicule » tout type de service mis à la disposition de tout élément du véhicule par tout procédé exécuté par au moins un composant électronique. La mise à jour d'un calculateur d'un véhicule, l'exécution d'un logiciel de conduite autonome utilisant des données environnementales transmises par une communication radiofréquence au véhicule, la diffusion par un système d'info-divertissement d'un contenu audio ou vidéo, le déverrouillage à distance du véhicule, etc. sont des exemples de services mis en oeuvre par le véhicule.

Pour être correctement exécutés, de nombreux services d'un véhicule doivent être mis en oeuvre dans des conditions bien particulières. Certains services, tels que le téléchargement de cartographies haute définition pour la conduite autonome ou la diffusion d'un contenu vidéo, nécessitent un débit important sur une liaison descendante du serveur vers le véhicule quand d'autres sont moins exigeants en débit mais nécessitent que le véhicule se déplace (collecte de données pour alimenter une base de données distante, météorologique par exemple) ou qu'un réseau interne du véhicule spécifique soit disponible.

Actuellement, chaque service opère de manière indépendante. Cela signifie notamment qu'un service qui doit être exécuté mais pour lequel certaines conditions ne sont pas remplies, mettra en oeuvre un nombre prédéterminé de nouvelles tentatives d'exécution (retry en anglais) jusqu'à abandonner (time out en anglais).

Ces tentatives ont des effets délétères sur le fonctionnement des composants électroniques embarqués dans le véhicule. En particulier, le composant en charge de la connectivité, l'unité de contrôle télématique (Telematic Control Unit, TCU, en anglais), peut-être rapidement saturé par les requêtes d'échange de données avec des entités distantes de tous les services effectuant de nouvelles tentatives. Ces nouvelles tentatives encombrent également les réseaux internes (CAN, Ethernet) du véhicule.

En outre, le planning d'émission des tentatives peut être incohérent vis-à-vis de la situation du véhicule, des ressources distantes requises ou encore de l'exécution d'autres services requérant les mêmes ressources. Ainsi, la probabilité d'abandon (time out) des services est importante. Le brevet WO2017/135881 A1 est un exemple de tels services.

Il existe donc un besoin de rationalisation de la gestion de l'exécution des services mis en oeuvre par un véhicule.

La présente invention vient améliorer la situation.

A cet effet un premier aspect de l'invention concerne un procédé de de gestion par un serveur distant d'une mise en oeuvre sur un véhicule d'un premier et d'un deuxième service, selon la revendication 1 et son dispositif correspondant selon la revendication 7.

Ainsi, dans la présente invention, la gestion temporelle de l'exécution des services est rationalisée.

Un agenda déterministe et centralisé des procédures de nouvelles tentatives (retry en anglais) est mis en place. Chaque service se conforme à cet agenda comprenant des fenêtres de mise en oeuvre et les procédures de nouvelles tentatives à répétition sont supprimées.

En particulier, en restreignant la mise en oeuvre des services à des fenêtres correspondant à des multiples de la période d'envoi du message de synthèse, il est possible de limiter dans le temps le nombre de messages liés à des nouvelles tentatives et, dans le même temps, de vérifier par la réception de nouveaux messages de synthèse que les paramètres fonctionnels restent dans des états compatibles avec l'exécution du service.

On entend par « fenêtre correspond à un multiple d'une période » que la durée de la fenêtre correspond à un multiple de la période.

Dans un mode de réalisation, le premier et le deuxième multiple sont égaux à un.

Dans un mode de réalisation, le procédé comporte en outre les étapes de :
- détection d'une perte de connexion avec le véhicule quand aucun message de synthèse n'est reçu pendant un troisième multiple de la période correspond à la fréquence prédéterminée ;
- sur détection de la perte de connexion, génération d'un message d'inhibition du premier et/ou du deuxième service.

Ainsi, lorsqu'une perte de connexion est détectée, aucune tentative ne vient parasiter les différents réseaux requis pour la mise en oeuvre des services.

Dans un mode de réalisation, le premier, le deuxième et le troisième multiple sont égaux à un.

Dans un mode de réalisation, l'état du premier paramètre fonctionnel du véhicule est :
▪ un état d'une connexion d'une unité de contrôle télématique du véhicule à un réseau externe au véhicule ;
▪ un état de mouvement ou d'immobilité du véhicule ; ou
▪ un état de fonctionnement ou d'inactivité d'un réseau interne au véhicule.

Dans un mode de réalisation, l'état du deuxième paramètre fonctionnel du véhicule est :
▪ un état d'une connexion d'une unité de contrôle télématique du véhicule à un réseau externe au véhicule ;
▪ un état de mouvement ou d'immobilité du véhicule ; ou
▪ un état de fonctionnement ou d'inactivité d'un réseau interne au véhicule.

Un deuxième aspect de l'invention concerne un dispositif de gestion de mise en oeuvre sur un véhicule d'un premier et d'un deuxième service, selon la revendication 8.

Les revendications dépendantes décrivent des modes de réalisations préférés de l'invention.

D'autres caractéristiques et avantages de l'invention apparaîtront à l'examen de la description détaillée ci-après, et des dessins annexés sur lesquels :
[Fig 1] est un schéma illustrant le contexte de l'invention selon un mode de réalisation de l'invention ;
[Fig 2] est un diagramme illustrant les étapes d'un procédé selon un mode de réalisation de l'invention ;
[Fig 3] est un schéma illustrant une référence utilisé dans un mode de réalisation de l'invention ;
[Fig 4] est un diagramme illustrant les aspects temporels du procédé selon un mode de réalisation de l'invention ;
[Fig 5] illustre la structure d'un dispositif selon un mode de réalisation de l'invention.

L'invention est décrite ci-après dans son application, non limitative, au cas d'un véhicule automobile comprenant sept composants électroniques. D'autres applications sont naturellement envisageables pour la présente invention. Par exemple, le procédé selon l'invention peut être mis en oeuvre pour une motocyclette comprenant douze composants électroniques ou encore par une trottinette électrique comprenant deux composants électroniques.

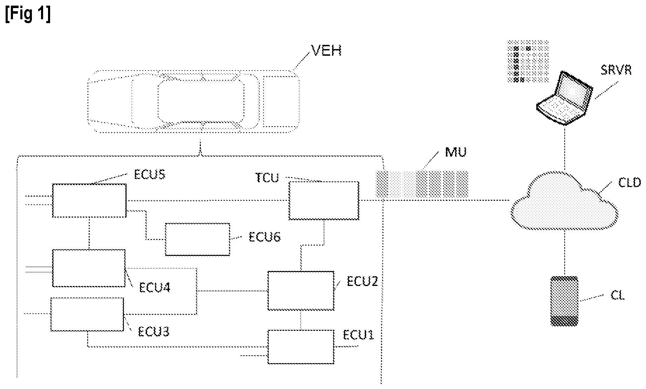

La **figure 1** illustre un contexte d'application de l'invention, selon un mode de réalisation.

Un véhicule automobile VEH comprend sept composants électroniques. Sur ces sept composants, VEH comprend six calculateurs, ECU1, ECU2, ECU3, ECU4, ECU5, ECU6 et une unité de contrôle télématique TCU (Telematic Control Unit en anglais).

Le TCU est le composant en charge de la connectivité, et a de ce fait la charge des échanges de données avec les entités débarquées. Ainsi, il rend possible des communications avec un réseau CLD comprenant par exemple un dispositif utilisateur CL, tel qu'un téléphone portable, et à un serveur distant SRVR.

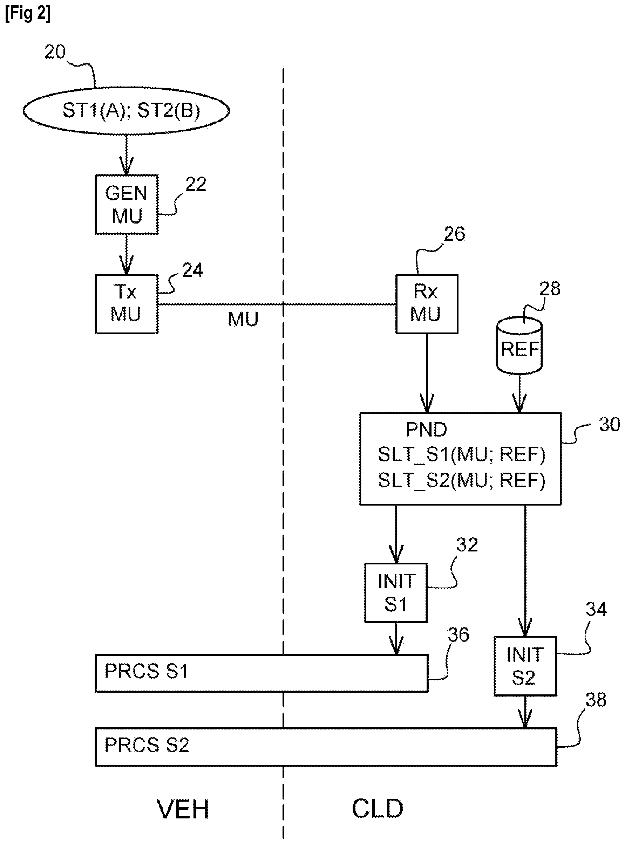

Comme cela sera détaillé ci-après en référence à la figure 2, et notamment aux étapes 20 et 22, le TCU génère un message de synthèse MU à partir d'informations sur des états de paramètres fonctionnels du véhicule, ces informations étant elle-même collectées à partir de données transmises par les composants électroniques ECU1, ECU2, ECU3, ECU4, ECU5, ECU6 et par le TCU.

Le serveur SRVR comporte une référence REF prédéterminée de correspondance entre des services et les états du véhicule. Comme détaillé à l'étape 30 de la figure 2, la référence REF est configuré pour identifier des services pouvant être mis en oeuvre en fonction d'états des paramètres fonctionnels du véhicule.

La **figure 2** illustre un procédé, selon un mode de réalisation de l'invention.

Les étapes représentées à la figure 2 sont mises en oeuvre au sein du véhicule VEH ou par un élément du réseau CLD, tel que le serveur SRVR.

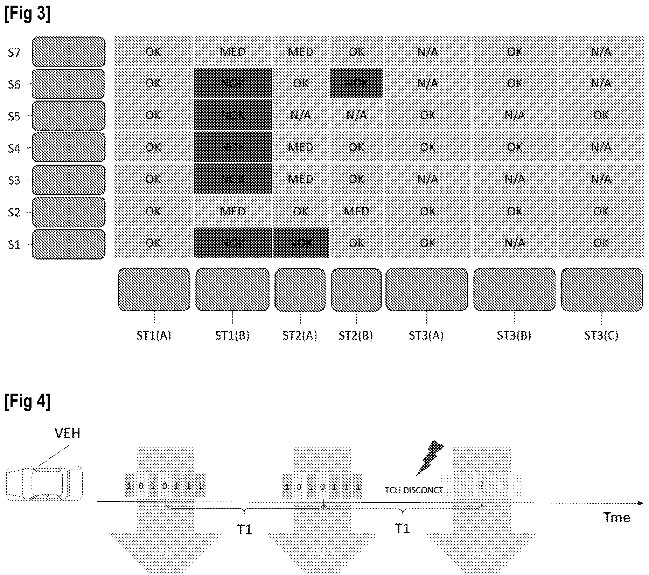

A une étape 20, une information ST1(A) sur un état A d'un premier paramètre fonctionnel ST1 du véhicule VEH et une information ST2(B) sur un état B d'un deuxième paramètre fonctionnel ST2 du véhicule sont acquises. Aux fins d'explications concises et lisibles, il est ici fait uniquement référence à deux paramètres fonctionnels mais bien d'autres paramètres peuvent être pris en compte, comme cela sera illustré par la figure 3 et détaillé ci-après à l'étape 30.

En particulier, dans un mode de réalisation, les informations ST1(A) et ST2(B) sont obtenues par le TCU à partir de données reçues d'au moins un des calculateurs ECU1, ECU2, ECU3, ECU4, ECU5, ECU6 et par le TCU lui-même.

Par exemple, un paramètre fonctionnel peut-être la disponibilité d'un réseau interne au véhicule (par exemple réseau spécifique au système d'info-divertissement), l'information sur la disponibilité étant obtenue par des composants, ECU3 et ECU4 par exemple, en charge de la gestion d'un tel réseau.

Dans un autre exemple, le paramètre fonctionnel peut-être une vitesse de déplacement du véhicule, le paramètre peut alors prendre l'état : en déplacement ou l'état : à l'arrêt. L'information d'état peut dans cet exemple être obtenue par le TCU à partir de données transmises par un capteur de roue ECU5 ou un système de positionnement par satellite ECU6. Dans la suite, on considère que ST2 correspond à cet exemple de paramètre fonctionnel : vitesse de déplacement du véhicule, et que l'état B correspond à un véhicule à l'arrêt.

Dans un autre exemple, le paramètre fonctionnel peut-être la disponibilité d'une connexion avec le réseau CLD ou avec tout autre réseau. L'état pris peut-être : déconnecté, connecté ou mauvaise connexion. L'information est alors directement disponible au niveau du TCU. Dans la suite, on considère que ST1 correspond à cet exemple de paramètre fonctionnel : disponibilité d'une connexion du TCU, et que l'état A correspond à un état connecté.

A une étape 22, un message de synthèse MU comprenant l'information ST1(A) sur l'état du premier paramètre fonctionnel du véhicule et l'information ST2(B) sur l'état du deuxième paramètre fonctionnel du véhicule est généré par le TCU.

Ainsi, le TCU joue ici le rôle de centralisation des informations d'état, qu'il collecte et agrège dans un unique message de synthèse.

A une étape 24, MU est envoyé par le TCU au réseau CLD.

Dans un mode de réalisation, MU est généré et envoyé périodiquement, à une fréquence prédéterminée. La période prédéterminée est par exemple d'une milliseconde, d'une seconde, de dix secondes, de trente secondes, d'une minute, de cinq minutes ou encore d'une heure. Sur la **figure 4**, la période est représentée par T1 sur l'axe du temps Tme, le message de synthèse MU est donc envoyé tous les T1.

A une étape 26, MU est reçu par le réseau CLD.

A une étape 30, une identification d'une possibilité de mise en oeuvre sur le véhicule VEH d'un premier service S1 et d'un deuxième service S2, à partir du message de synthèse MU et de la référence REF prédéterminée de correspondance entre services et états du véhicule est effectuée.

S1 et S2 correspondent à tout type de service mis à la disposition de tout élément du véhicule VEH par tout procédé exécuté par au moins un composant électronique, tels que ECU1, ECU2, ECU3, ECU4, ECU5, ECU6 ou encore TCU. La mise à jour d'un calculateur d'un véhicule, l'exécution d'un logiciel de conduite autonome utilisant des données environnementales transmises par une communication radiofréquence au véhicule, la diffusion par un système d'info-divertissement d'un contenu audio ou vidéo, le déverrouillage à distance du véhicule, etc. sont des exemples de services mis en oeuvre par le véhicule.

La référence REF est illustré à la **figure 3** selon un mode de réalisation de l'invention.

REF est représenté à la figure 3 sous forme d'un tableau (elle peut être codée selon tout autre format, tel que des instructions compréhensibles dans un langage informatique particulier) dans lequel les colonnes correspondent aux états (A, B ou C) de paramètres fonctionnel (ST1, ST2 ou ST3) du véhicule et les lignes à des services S1, S2, S3, S4, S5, S6 et S7.

A chaque état possible pour chaque paramètre fonctionnel sont affectées autant de cases que de services possibles. Dans chacune de ces cases, il peut être mentionné :
- OK : le service est possible pour cet état ;
- NOK : le service est impossible pour cet état ;
- N/A : le service n'est pas concerné par cet état ;
- MED : le service est possible avec une exécution dégradée pour cet état.

Dans le présent exemple, MU informe CLD d'une connexion du TCU (ST1(A)) et d'un véhicule à l'arrêt (ST2(B)). REF indique alors que le service S1 peut être mis en oeuvre puisque ST1(A) et ST2(B) sont compatibles avec S1 (cases OK). De même, REF indique que S2 peut être exécuté de manière dégradé puisque ST1(A) est possible avec S2 mais ST2(B) n'est possible que de manière dégradée (case MED). Dans la suite, seuls ces services S1 et S2 seront détaillés.

Dans un mode de réalisation particulier, l'étape 30 d'identification comporte les sous-étapes de :
∘ extraction de l'information sur les états des premier et deuxièmes paramètre à partir du message de synthèse MU ;
∘ extraction à une sous-étape 28 de la référence prédéterminée à partir d'une base de données reliée au serveur distant ;
∘ comparaison des états de l'information aux états de la référence pour identifier les services pouvant être mis en oeuvre avec les états de l'information.

Dans un sous-mode de réalisation particulier, l'étape de comparaison est mise en oeuvre dans un même processus d'un même programme informatique pour le premier et le deuxième service.

A une étape 32, sur identification de la possibilité de mise en oeuvre du premier service (service possible dans le présent exemple), une requête d'exécution du premier service sur une première fenêtre de mise en oeuvre du premier service est transmise au véhicule puis exécuté avec le véhicule à une étape 36. La première fenêtre de mise en oeuvre correspondant à un premier multiple de la période correspondant à la fréquence prédéterminée.

Ainsi, par exemple, il peut s'agir d'exécuter une mise à jour d'un composant physique ou logiciel du TCU.

A une étape 34, sur identification de la possibilité de mise en oeuvre du deuxième service (service possible de manière dégradée dans le présent exemple), une requête d'exécution du deuxième service sur une deuxième fenêtre de mise en oeuvre du deuxième service est transmise au véhicule puis exécuté avec le véhicule à une étape 38. Ainsi, par exemple, il peut s'agir d'exécuter une calibration d'un système de positionnement.

La deuxième fenêtre de mise en oeuvre correspond à un deuxième multiple de la période correspondant à la fréquence prédéterminée.

Dans un mode de réalisation simple, le premier, le deuxième et le troisième multiple sont égaux à un. Ainsi, à chaque période, il est vérifié que le(s) service(s) peut encore être mis en oeuvre.

Dans d'autres modes de réalisation, le choix du multiple est adapté au service concerné. Un service long peut ainsi être mis en oeuvre pendant deux, trois, cinq, dix, cinquante ou encore cent périodes.

Dans un mode de réalisation, le choix du multiple est déterminé de manière dynamique à partir de la réception des précédents messages de synthèse et d'un historique de réception des messages de synthèse, au moins (l'historique de localisation du véhicule peut également être utilisé).

Dans un mode de réalisation, le procédé comporte en outre les étapes de :
- détection d'une perte de connexion avec le véhicule quand aucun message de synthèse n'est reçu pendant un troisième multiple de la période correspond à la fréquence prédéterminée ;
- sur détection de la perte de connexion, génération d'un message d'inhibition du premier et/ou du deuxième service.

Par exemple, à la figure 4, lorsqu'il est détecté que la communication avec le TCU est rompue, TCU DISCONCT, la mise en oeuvre des services peut être inhibée, même lorsque le service est encore dans sa fenêtre de mise en oeuvre.

Dans un mode de réalisation, les fenêtres de mise en oeuvre des premier et deuxième services correspondent à une fenêtre prédéterminée unique. La fenêtre prédéterminée unique correspond typiquement à un multiple, trois ou quatre fois par exemple, de la période utilisée pour l'envoi du message de synthèse MU. La fenêtre prédéterminée unique peut également correspondre à une milliseconde, une seconde, dix secondes, trente secondes, une minute, cinq minutes ou encore une heure.

Dans un autre mode de réalisation, les fenêtres de mise en oeuvre des premier et deuxième services sont distinctes et spécifiques au service concerné.

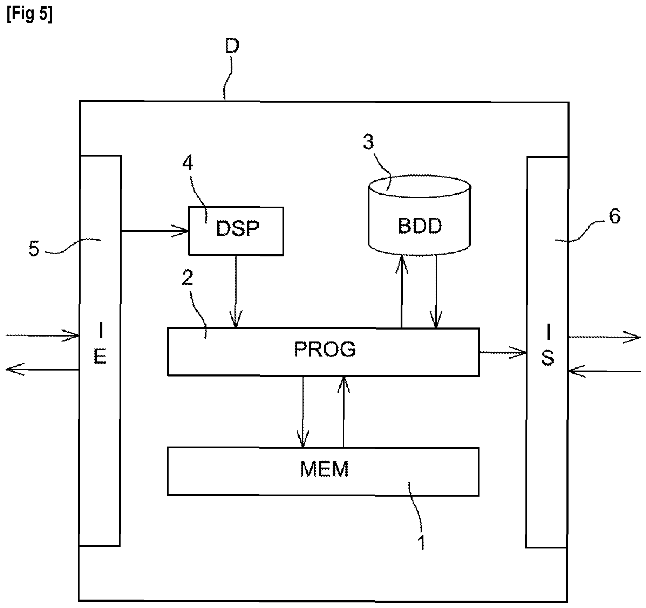

La **figure 5** représente un exemple de dispositif D compris dans le véhicule VEH, dans le réseau CLD ou dans le serveur SRVR. Ce dispositif D peut être utilisé en tant que dispositif centralisé en charge d'au moins certaines étapes du procédé décrit ci-avant en référence à la figure 2. Dans un mode de réalisation, il correspond par exemple au TCU. Dans un autre mode de réalisation, il correspond à un sous-dispositif compris dans le serveur SRVR.

Ce dispositif D peut prendre la forme d'un boitier comprenant des circuits imprimés, de tout type d'ordinateur ou encore d'un smartphone.

Le dispositif D comprend une mémoire vive 1 pour stocker des instructions pour la mise en oeuvre par un processeur 2 d'au moins une étape des procédés tels que décrits ci-avant. Le dispositif comporte aussi une mémoire de masse 3 pour le stockage de données destinées à être conservées après la mise en oeuvre du procédé.

Le dispositif D peut en outre comporter un processeur de signal numérique (DSP) 4. Ce DSP 4 reçoit des données pour mettre en forme, démoduler et amplifier, de façon connue en soi ces données.

Le dispositif comporte également une interface d'entrée 5 pour la réception des données mises en oeuvre par des procédés selon l'invention et une interface de sortie 6 pour la transmission des données mises en oeuvre par le procédé.

Ainsi, il a été décrit un mode de réalisation correspondant à une architecture électronique exemplatif (sept composants électroniques, etc.) pour un véhicule automobile. La présente invention est également applicable à d'autres architectures électroniques (nombre différent de composants et/ou de logiciels, etc.).

## Revendications

1. Procédé de gestion par un serveur distant d'une mise en oeuvre sur un véhicule (VEH) d'un premier et d'un deuxième service, le procédé étant mis en oeuvre par le serveur distant et comportant les étapes de :
- réception (26) d'un message de synthèse comprenant une information sur un état d'un premier paramètre fonctionnel du véhicule et une information sur un état d'un deuxième paramètre fonctionnel du véhicule, un message de synthèse étant reçu à une fréquence prédéterminée ; le procédé étant **caractérisé en ce que** :
- pour chaque réception de message de synthèse (MU), identification (30) d'une possibilité de mise en oeuvre sur le véhicule du premier service et du deuxième service, à partir du message de synthèse et d'une référence (REF) prédéterminée de correspondance entre services et états du véhicule ;
- sur identification de la possibilité de mise en oeuvre du premier service, transmission au véhicule d'une requête d'exécution du premier service sur une première fenêtre de mise en oeuvre, la première fenêtre de mise en oeuvre correspondant à un premier multiple de la période correspondant à la fréquence prédéterminée ;
- sur identification de la possibilité de mise en oeuvre du deuxième service, transmission au véhicule d'une requête d'exécution du deuxième service sur une deuxième fenêtre de mise en oeuvre, la deuxième fenêtre de mise en oeuvre correspondant à un deuxième multiple de la période correspondant à la fréquence prédéterminée.

2. Procédé selon la revendication 1, comportant en outre les étapes de :
- détection d'une perte de connexion avec le véhicule quand aucun message de synthèse n'est reçu pendant un troisième multiple de la période correspond à la fréquence prédéterminée ;
- sur détection de la perte de connexion, génération d'un message d'inhibition du premier et/ou du deuxième service.

3. Procédé selon l'une des revendications précédentes, dans lequel l'état du premier paramètre fonctionnel du véhicule est :
▪ un état d'une connexion d'une unité de contrôle télématique du véhicule à un réseau externe au véhicule ;
▪ un état de mouvement ou d'immobilité du véhicule ; ou
▪ un état de fonctionnement ou d'inactivité d'un réseau interne au véhicule.

4. Procédé selon l'une des revendications précédentes, dans lequel l'état du deuxième paramètre fonctionnel du véhicule est :
▪ un état d'une connexion d'une unité de contrôle télématique du véhicule à un réseau externe au véhicule ;
▪ un état de mouvement ou d'immobilité du véhicule ; ou
▪ un état de fonctionnement ou d'inactivité d'un réseau interne au véhicule.

5. Procédé de gestion de mise en oeuvre sur un véhicule d'un premier et d'un deuxième service, le procédé étant mis en oeuvre par un dispositif compris sur le véhicule et comportant les étapes de :
- acquisition (20) d'une information sur un état d'un premier paramètre fonctionnel du véhicule et d'une information sur un état d'un deuxième paramètre fonctionnel du véhicule ;
- génération (22) d'un message de synthèse comprenant l'information sur l'état du premier paramètre fonctionnel du véhicule et l'information sur l'état du deuxième paramètre fonctionnel du véhicule ;
- transmission (24) à une fréquence prédéterminée à un serveur distant du message de synthèse ;
- réception d'une requête d'exécution du premier service sur une première fenêtre de mise en oeuvre correspondant à un premier multiple de la période correspondant à la fréquence prédéterminée, et/ou d'une requête d'exécution du deuxième service sur une deuxième fenêtre de mise en oeuvre, la deuxième fenêtre de mise en oeuvre correspondant à un deuxième multiple de la période correspondant à la fréquence prédéterminée ;
- exécution de la requête d'exécution.

6. Programme informatique comportant des instructions pour la mise en oeuvre du procédé selon l'une quelconque des revendications précédentes, lorsque ces instructions sont exécutées par un processeur (2).

7. Dispositif (D) de gestion compris sur un serveur distant d'une mise en oeuvre d'un premier et d'un deuxième service sur un véhicule, le dispositif comportant au moins un processeur et une mémoire agencés pour effectuer les opérations de :
- réception d'un message de synthèse comprenant une information sur un état d'un premier paramètre fonctionnel du véhicule et une information sur un état d'un deuxième paramètre fonctionnel du véhicule, un message de synthèse étant reçu à une fréquence prédéterminée ; le dispositif étant **caractérisé par** les opérations de :
- pour chaque réception de message de synthèse, identification d'une possibilité de mise en oeuvre sur le véhicule du premier service et du deuxième service, à partir du message de synthèse et d'une référence prédéterminée de correspondance entre services et états du véhicule ;
- sur identification de la possibilité de mise en oeuvre du premier service, mise en oeuvre du premier service avec le véhicule transmission au véhicule d'une requête d'exécution du premier service sur une fenêtre de mise en oeuvre, la fenêtre de mise en oeuvre correspondant à un premier multiple de la période correspondant à la fréquence prédéterminée ;
- sur identification de la possibilité de mise en oeuvre du deuxième service, transmission au véhicule d'une requête d'exécution du deuxième service sur une deuxième fenêtre de mise en oeuvre, la deuxième fenêtre de mise en oeuvre correspondant à un deuxième multiple de la période correspondant à la fréquence prédéterminée.

8. Dispositif (D) de gestion de mise en oeuvre sur un véhicule d'un premier et d'un deuxième service, le dispositif comportant au moins un processeur et une mémoire agencés pour effectuer les opérations de :
- acquisition d'une information sur un état d'un premier paramètre fonctionnel du véhicule et d'une information sur un état d'un deuxième paramètre fonctionnel du véhicule ;
- génération d'un message de synthèse comprenant l'information sur l'état du premier paramètre fonctionnel du véhicule et l'information sur l'état du deuxième paramètre fonctionnel du véhicule ; le dispositif étant **caractérisé par** les opérations de :
- transmission à une fréquence prédéterminée à un serveur distant du message de synthèse ;
- réception d'une requête d'exécution du premier service sur une première fenêtre de mise en oeuvre correspondant à un premier multiple de la période correspondant à la fréquence prédéterminée, et/ou d'une requête d'exécution du deuxième service sur une deuxième fenêtre de mise en oeuvre, la deuxième fenêtre de mise en oeuvre correspondant à un deuxième multiple de la période correspondant à la fréquence prédéterminée ;
- exécution de la requête d'exécution.

9. Véhicule distant configuré pour comprendre le dispositif selon la revendication 8.

## Patentansprüche

1. Verfahren zum Verwalten einer Implementierung eines ersten und eines zweiten Dienstes auf einem Fahrzeug (VEH) durch einen Remote-Server, wobei das Verfahren durch den Remote-Server implementiert wird und die folgenden Schritte umfasst:
- Empfangen (26) einer zusammenfassenden Nachricht, die Informationen über einen Zustand eines ersten Funktionsparameters des Fahrzeugs und Informationen über einen Zustand eines zweiten funktionalen Parameters des Fahrzeugs umfasst, wobei eine zusammenfassende Nachricht mit einer vorbestimmten Häufigkeit empfangen wird; :
- für jeden Empfang einer zusammenfassenden Nachricht (MU), Identifizierung (30) einer Möglichkeit der Implementierung des ersten Dienstes und des zweiten Dienstes im Fahrzeug anhand der zusammenfassenden Nachricht und einer vorgegebenen Referenz (REF) der Entsprechung zwischen Diensten und Fahrzeugzuständen ;
- bei Identifizierung der Möglichkeit der Implementierung des ersten Dienstes, Übertragung einer Anforderung zur Ausführung des ersten Dienstes über ein erstes Implementierungsfenster an das Fahrzeug, wobei das erste Implementierungsfenster einem ersten Vielfachen des Zeitraums entspricht, der der vorgegebenen Häufigkeit entspricht;
- bei Identifizierung der Möglichkeit der Implementierung des zweiten Dienstes, Senden einer Anforderung zur Ausführung des zweiten Dienstes über ein zweites Implementierungsfenster an das Fahrzeug, wobei das zweite Implementierungsfenster einem zweiten Vielfachen des Zeitraums entspricht, der der vorgegebenen Häufigkeit entspricht.

2. Verfahren nach Anspruch 1, weiterhin umfassend die Schritte:
- Erkennen eines Verbindungsverlusts mit dem Fahrzeug, wenn während eines dritten Vielfachen des Zeitraums, der der vorgegebenen Häufigkeit entspricht, keine zusammenfassende Nachricht empfangen wird;
- bei Erkennung des Verbindungsverlustes Erzeugen einer Sperrmeldung für den ersten und/oder zweiten Dienst.

3. Verfahren nach einem der vorhergehenden Ansprüche, bei dem der Zustand des ersten Funktionsparameters des Fahrzeugs ist:
▪ ein Zustand einer Verbindung eines Fahrzeugtelematiksteuergeräts mit einem Netzwerk außerhalb des Fahrzeugs;
▪ ein Zustand der Bewegung oder Unbeweglichkeit des Fahrzeugs; Oder
▪ ein Betriebszustand oder eine Inaktivität eines fahrzeuginternen Netzwerks.

4. Verfahren nach einem der vorhergehenden Ansprüche, bei dem der Zustand des zweiten Funktionsparameters des Fahrzeugs ist:
▪ ein Zustand einer Verbindung eines Fahrzeugtelematiksteuergeräts mit einem Netzwerk außerhalb des Fahrzeugs;
▪ ein Zustand der Bewegung oder Unbeweglichkeit des Fahrzeugs; Oder
▪ ein Betriebszustand oder eine Inaktivität eines fahrzeuginternen Netzwerks.

5. Verfahren zum Verwalten der Implementierung eines ersten und eines zweiten Dienstes in einem Fahrzeug, wobei das Verfahren durch ein im Fahrzeug enthaltenes Gerät implementiert wird und die folgenden Schritte umfasst:
- Erfassen (20) von Informationen über einen Zustand eines ersten Funktionsparameters des Fahrzeugs und von Informationen über einen Zustand eines zweiten Funktionsparameters des Fahrzeugs;
- Generierung (22) einer zusammenfassenden Nachricht, die Informationen über den Zustand des ersten Funktionsparameters des Fahrzeugs und Informationen über den Zustand des zweiten Funktionsparameters des Fahrzeugs umfasst;
- Übertragung (24) der zusammenfassenden Nachricht mit einer vorgegebenen Häufigkeit an einen entfernten Server;
- Empfangen einer Anforderung zur Ausführung des ersten Dienstes in einem ersten Implementierungsfenster, das einem ersten Vielfachen der Periode entspricht, die der vorgegebenen Häufigkeit entspricht, und/oder einer Anforderung zur Ausführung des zweiten Dienstes in einer zweiten Fensterimplementierung, wobei das zweite Implementierungsfenster entspricht auf ein zweites Vielfaches der Periode, die der vorgegebenen Frequenz entspricht;
- Ausführung der Ausführungsabfrage.

6. Computerprogramm, das Anweisungen zur Implementierung des Verfahrens nach einem der vorhergehenden Ansprüche umfasst, wenn diese Anweisungen von einem Prozessor (2) ausgeführt werden.

7. Gerät (D) zur Verwaltung einer Implementierung eines ersten und eines zweiten Dienstes in einem Fahrzeug, die auf einem Remote-Server enthalten ist, wobei das Gerät mindestens einen Prozessor und einen Speicher umfasst, der so angeordnet ist, dass er die folgenden Vorgänge ausführt:
- Empfang einer zusammenfassenden Nachricht, die Informationen über einen Zustand eines ersten Funktionsparameters des Fahrzeugs und Informationen über einen Zustand eines zweiten funktionalen Parameters des Fahrzeugs umfasst, wobei eine zusammenfassende Nachricht mit einer vorgegebenen Häufigkeit empfangen wird; Das Gerät zeichnet sich durch folgende Funktionen aus:
- für jeden Empfang einer zusammenfassenden Nachricht, Identifizieren einer Möglichkeit der Implementierung des ersten Dienstes und des zweiten Dienstes im Fahrzeug anhand der zusammenfassenden Nachricht und einer vorgegebenen Referenz der Entsprechung zwischen Diensten und Zuständen des Fahrzeugs;
- bei Identifizierung der Möglichkeit der Umsetzung des ersten Dienstes, Umsetzung des ersten Dienstes mit dem Fahrzeug, Übermittlung einer Aufforderung zur Ausführung des ersten Dienstes an das Fahrzeug in einem Umsetzungsfenster, wobei das entsprechende Umsetzungsfenster einem ersten Vielfachen des Zeitraums entspricht die vorgegebene Frequenz;
- bei Identifizierung der Möglichkeit der Implementierung des zweiten Dienstes, Senden einer Anforderung zur Ausführung des zweiten Dienstes über ein zweites Implementierungsfenster an das Fahrzeug, wobei das zweite Implementierungsfenster einem zweiten Vielfachen des Zeitraums entspricht, der der vorgegebenen Häufigkeit entspricht.

8. Vorrichtung (D) zum Verwalten der Implementierung eines ersten und eines zweiten Dienstes in einem Fahrzeug, wobei die Vorrichtung mindestens einen Prozessor und einen Speicher umfasst, der so angeordnet ist, dass er die folgenden Vorgänge ausführt:
- Erfassen von Informationen über einen Zustand eines ersten Funktionsparameters des Fahrzeugs und Informationen über einen Zustand eines zweiten Funktionsparameters des Fahrzeugs;
- Erzeugen einer zusammenfassenden Nachricht, die Informationen über den Zustand des ersten Funktionsparameters des Fahrzeugs und Informationen über den Zustand des zweiten Funktionsparameters des Fahrzeugs umfasst; Das Gerät zeichnet sich durch folgende Funktionen aus:
- Übertragung der zusammenfassenden Nachricht mit einer vorgegebenen Häufigkeit an einen entfernten Server;
- Empfangen einer Anforderung zur Ausführung des ersten Dienstes in einem ersten Implementierungsfenster, das einem ersten Vielfachen der Periode entspricht, die der vorgegebenen Häufigkeit entspricht, und/oder einer Anforderung zur Ausführung des zweiten Dienstes in einer zweiten Fensterimplementierung, wobei das zweite Implementierungsfenster entspricht auf ein zweites Vielfaches der Periode, die der vorgegebenen Frequenz entspricht;
- Ausführung der Ausführungsabfrage.

9. Ferngesteuertes Fahrzeug, das so konfiguriert ist, dass es die Vorrichtung nach Anspruch 8 enthält.

## Claims

1. Method for managing by a remote server an implementation on a vehicle (VEH) of a first and a second service, the method being implemented by the remote server and comprising the steps of:
- receiving (26) a summary message comprising information on a state of a first functional parameter of the vehicle and information on a state of a second functional parameter of the vehicle, a summary message being received at a predetermined frequency; the process being **characterized in that**:
- for each reception of a summary message (MU), identification (30) of a possibility of implementation on the vehicle of the first service and the second service, from the summary message and a predetermined reference (REF) of correspondence between services and vehicle states;
- upon identification of the possibility of implementing the first service, transmission to the vehicle of a request to execute the first service over a first implementation window, the first implementation window corresponding to a first multiple of the period corresponding to the predetermined frequency;
- upon identification of the possibility of implementing the second service, transmission to the vehicle of a request for execution of the second service over a second implementation window, the second implementation window corresponding to a second multiple of the period corresponding to the predetermined frequency.

2. Method according to claim 1, further comprising the steps of:
- detection of a loss of connection with the vehicle when no summary message is received during a third multiple of the period corresponding to the predetermined frequency;
- upon detection of the loss of connection, generation of an inhibition message for the first and/or second service.

3. Method according to one of the preceding claims, in which the state of the first functional parameter of the vehicle is:
▪ a state of a connection of a vehicle telematics control unit to a network external to the vehicle;
▪ a state of movement or immobility of the vehicle; Or
▪ a state of operation or inactivity of a network internal to the vehicle.

4. Method according to one of the preceding claims, in which the state of the second functional parameter of the vehicle is:
▪ a state of a connection of a vehicle telematics control unit to a network external to the vehicle;
▪ a state of movement or immobility of the vehicle; Or
▪ a state of operation or inactivity of a network internal to the vehicle.

5. Method for managing the implementation on a vehicle of a first and a second service, the method being implemented by a device included on the vehicle and comprising the steps of:
- acquisition (20) of information on a state of a first functional parameter of the vehicle and of information on a state of a second functional parameter of the vehicle;
- generation (22) of a summary message comprising information on the state of the first functional parameter of the vehicle and information on the state of the second functional parameter of the vehicle;
- transmission (24) at a predetermined frequency to a remote server of the summary message;
- receiving a request for execution of the first service on a first implementation window corresponding to a first multiple of the period corresponding to the predetermined frequency, and/or a request for execution of the second service on a second window implementation, the second implementation window corresponding to a second multiple of the period corresponding to the predetermined frequency;
- execution of the execution query.

6. Computer program comprising instructions for implementing the method according to any one of the preceding claims, when these instructions are executed by a processor (2).

7. Device (D) for management included on a remote server of an implementation of a first and a second service on a vehicle, the device comprising at least one processor and a memory arranged to carry out the operations of:
- reception of a summary message comprising information on a state of a first functional parameter of the vehicle and information on a state of a second functional parameter of the vehicle, a summary message being received at a predetermined frequency; the device being **characterized by** the operations of:
- for each reception of a summary message, identification of a possibility of implementation on the vehicle of the first service and the second service, from the summary message and a predetermined reference of correspondence between services and states of the vehicle;
- on identification of the possibility of implementing the first service, implementation of the first service with the vehicle transmission to the vehicle of a request for execution of the first service on an implementation window, the corresponding implementation window to a first multiple of the period corresponding to the predetermined frequency;
- upon identification of the possibility of implementing the second service, transmission to the vehicle of a request for execution of the second service over a second implementation window, the second implementation window corresponding to a second multiple of the period corresponding to the predetermined frequency.

8. Device (D) for managing the implementation on a vehicle of a first and a second service, the device comprising at least one processor and a memory arranged to carry out the operations of:
- acquisition of information on a state of a first functional parameter of the vehicle and information on a state of a second functional parameter of the vehicle;
- generation of a summary message comprising information on the state of the first functional parameter of the vehicle and information on the state of the second functional parameter of the vehicle; the device being **characterized by** the operations of:
- transmission at a predetermined frequency to a remote server of the summary message;
- receiving a request for execution of the first service on a first implementation window corresponding to a first multiple of the period corresponding to the predetermined frequency, and/or a request for execution of the second service on a second window implementation, the second implementation window corresponding to a second multiple of the period corresponding to the predetermined frequency;
- execution of the execution query.

9. Remote vehicle configured to include the device of claim 8.
